# EUROPEAN PATENT SPECIFICATION

(11) **EP 2 523 400 B1**
(45) Date of publication and mention of the grant of the patent: **05.07.2017**
(21) Application number: 11165464.6
(22) Date of filing: 10.05.2011
(51) Int. Cl.: H04L 12/707, H04L 12/703

(54) **An intermediate network node in a telecommunications system**
Netzwerkzwischenknoten in einem Telekommunikationssystem
Noeud de réseau intermédiaire dans un système de télécommunication

(43) Date of publication of application: 14.11.2012
(73) Proprietor: Airbus Defence and Space Oy, 00380 Helsinki (FI)
(72) Inventor: Kemppainen, Jouni, 00380 Helsinki (FI); Lahtinen, Olli-Pekka, 00380 Helsinki (FI); Väisänen, Mika, 00380 Helsinki (FI)
(74) Representative: Kolster Oy Ab

(56) References cited:
- WO-A1-00/13376
- WO-A1-2007/040417
- US-B1- 6 751 746
- US-B1- 7 107 334

## Description

### FIELD

The invention relates to the field of telecommunications and, particularly, to intermediate network nodes in packet-switched communications systems.

### BACKGROUND

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

With the evolvement of communications technologies and different services using packet-switched technology, the importance of reliable and continuous communications for some services has consistently increased. One reason is that real-time traffic, such as voice, is very sensitive on link failures and/or different delays caused by transmitting real-time traffic over a packet network, using Internet Protocol (IP) or Ethernet, for example.

A solution providing fault tolerance against a link failure in networks utilizing IP or Ethernet and allowing rerouting of packets in case a link fails is based on connecting network nodes into a ring, also called a loop, wherein one of the transmission links (a link is between two nodes) is turned to idle so that there is no transmission loop, and in case of a link failure, the idle link is turned to active in a process called convergence. However, in any case, when an active link fails, convergence takes some time, and some packets may be lost or the delay becomes so big that the received real-time data may be jittering. This is especially problematic in telecommunications relating to public safety: losing part of an address, for example, may be fatal.

A solution overcoming the above defect and providing fault tolerance is disclosed in FR 2791839. It teaches that a sending ATM (asynchronous transfer mode) terminal duplicates an ATM packet (cell) and then uses two different parallel virtual circuits over which the packets containing the same data content are sent. The duplication is transparent to networks node via which the packets pass. The receiving ATM terminal then receives the packets, reconstructs the information on the packets, and decides which one of the packets containing the same information is forwarded to upper layers. The duplication provides fault tolerance by ensuring that in case of a link failure in one of the parallel virtual circuits the packet transmitted over the other parallel virtual circuit is received.

WO 2007/040417 discloses another solution in which two or more independent paths are established between a sender and a receiver, each path having at least one intermediate node that is cross-linked to another intermediate node belonging to another path. The cross-linked intermediate node may receive two copies of a packet, forwards the first received over an independent path and a copy of the first received over the other independent path, and discards the later received copy of the packet.

US 7107334 discloses a solution in which original packets are sent over a first routing path to the destination, and replicas of the packets are sent over a second routing path that is different from the first routing path to the destination so that the duplication is transparent to intermediate network nodes. Further, in the solution the router replicating packets receives itself only one packet.

### SUMMARY

An object of the present invention is to improve the duplication solution. The object is achieved by a method, an apparatus and a computer program product as defined in the independent claims. Further embodiments of the invention are disclosed in the dependent claims.

### BRIEF DESCRIPTION OF THE DRAWINGS

In the following different embodiments will be described in greater detail with reference to the attached drawings, in which
Figure 1 shows simplified architecture of a system and schematic diagrams of an apparatus;
Figure 2 is a simplified block diagram of an apparatus; and
Figure 3 is a flow chart illustrating an embodiment.

### DETAILED DESCRIPTION OF SOME EMBODIMENTS

Exemplary embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Embodiments of present invention are applicable to any intermediate node, corresponding components, corresponding apparatuses, and/or to any communication system or any combination of different communication systems supporting multi-homing. Multi-homing means a capability to receive and/or send over two or more active communication links. The communication links may be physical links or virtual links, or some of them may be physical links and some virtual links. The communication system may be a wireless communication system or a communication system utilizing both fixed networks and wireless networks. The protocols used and the specifications of communication systems, and apparatuses, especially in wireless communication, develop rapidly. Such development may require extra changes to an embodiment. Therefore, all words and expressions should be interpreted broadly and are intended to illustrate, not to restrict, the embodiment.

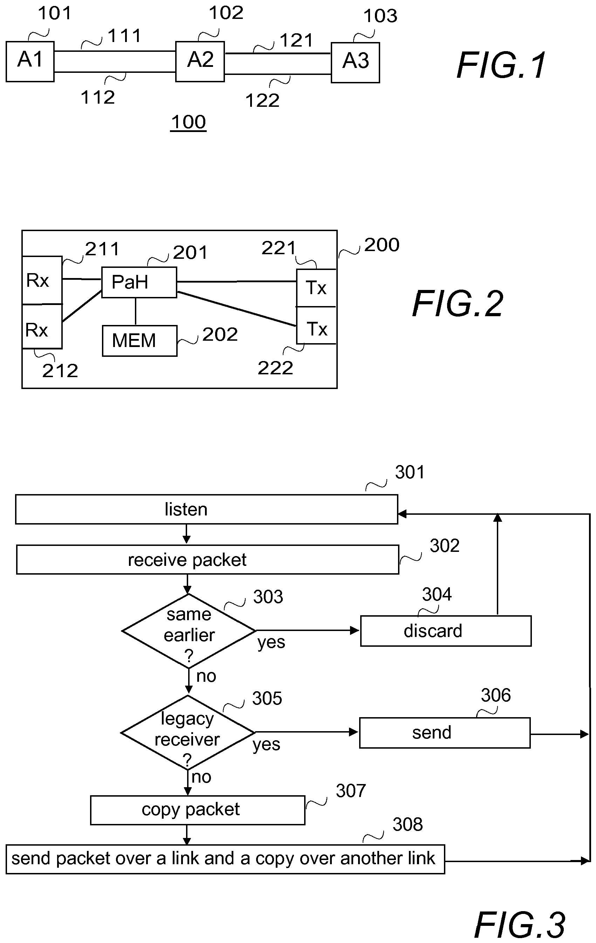

A highly simplified general architecture of a system 100 supporting multi-homing according to an embodiment is illustrated in Figure 1. Figure 1 is a simplified architecture only showing a minimum number of apparatuses to illustrate the embodiment. It is apparent to a person skilled in the art that a system and a network comprises in practise many apparatuses (number of which may be even or odd) and the apparatuses may be for different purposes.

In the illustrated example an apparatus A2 102 is configured to listen to two links 111 and 112 to receive packets from an apparatus A1 101 and send packets over two links 121 and 122 towards an apparatus A3 103.

The apparatus A2 is an intermediate network node that will be described in more detail below. The apparatus A1 may be another intermediate network node, or it may be an end point apparatus (i.e. sending apparatus, like a user equipment or a server node). The apparatus A3 may also be another intermediate network node or an end point apparatus (i.e. a receiving apparatus, like a user equipment or a server node). If the apparatus A1 and/or the apparatus A3 is an intermediate network node, it either is or is not configured to perform the functionality described below with the intermediate network node. Below, for the sake of clarity, the apparatus A1 is called a sender and apparatus A3 is called a receiver. Although the apparatuses have been depicted in Figure 1 as one entity, they may be implemented in one or more physical or logical entities. Their units and functions may be software and/or software-hardware and/or firmware components (recorded indelibly on a medium such as read-only-memory or embodied in hard-wired computer circuitry).

A link 111, 112, 121, 122 between the sender 101 or the receiver 103 and the intermediate network node 102 may be a direct link in a network or the link may be a path via one or more networks. Further, the link may be a link in a virtual network or a link in a physical network, a virtual network being a logically separated network within a physical network or within a chain of physical networks. An example of a virtual network is a virtual private network. Each link may be of different type, or the links may be of the same type, or some but not all of the links may be of the same type. In other words, the type of the link bears no significance. Further, although it has been assumed that the intermediate network node 102 listens two links and uses two links for sending, more than two links may be used for receiving and/or for sending. However, below it is assumed for the sake of clarity that two links are used for receiving and two links for sending.

The network (or networks) involved in the transmission may be of any type, and if two or more are involved, they may be of different type or of the same type. Examples of network types include an Ethernet network, Internet Protocol (IP) network, wireless local area network, Wi-Fi, WiMax, mobile WiMax, Flash Orthogonal frequency-division multiplexing (OFDM) network, any 3GGP network, such as GSM2+, UMTS (universal mobile telecommunication system), and future developments of mobile communications network (such as LTE Advanced and other 4^{th} generation networks), Trans European Trunked Radio or Terrestrial Trunked Radio TETRA network, and other digital Private Mobile Radio or Professional Mobile Radio PMR type private networks.

Figure 2 is a simplified block diagram of an intermediate network node, or a corresponding apparatus configured to act as an intermediate network node. Examples of an intermediate network node include a gateway node, a border node between two systems or between two different physical networks, a media gateway controller controlling a media gateway (a media gateway connects different types of networks, and one of its main functions is to convert between different transmission and coding techniques), an access gateway, a network node taking care of switching, like a Digital Exchange DXT in TETRA or a mobile switching centre, a base station, an evolved node B, and a relay.

The intermediate network node 200 is a computing apparatus configured to pass traffic (i.e. receive and forward packets) and to perform one or more of network node functionalities described below with an embodiment, and it may be configured to perform functionalities from different embodiments. For this purpose, the network node comprises a packet handling unit (PaH) 201 for providing at least copying and discarding a received packet as will be described below. The packet handling unit 201 may be a separate unit or integrated to another unit in the intermediate network node.

An intermediate network node, or a corresponding apparatus implementing functionality or some functionality according to an embodiment may generally include a processor (not shown in Figure 2), controller, control unit, micro-controller, or the like connected to a memory and to various interfaces of the apparatus. Generally the processor is a central processing unit, but the processor may be an additional operation processor. The packet handling unit 201 may be configured as a computer or a processor, or a microprocessor, such as a single-chip computer element, or as a chipset, including at least a memory for providing storage area used for arithmetic operation and an operation processor for executing the arithmetic operation. The packet handling unit 201, may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions of one or more embodiments. In other words, the packet handling unit 201 may be an element that comprises one or more arithmetic logic units, a number of special registers and control circuits.

Further, the intermediate network node may comprise other units, and it comprises different interface units, such as receiving units 211, 212 for receiving different inputs, control information packets, user data packets and messages, for example, and sending units 221, 222 for sending different outputs, control information packets, user data packets and messages, for example. The receiving units and the transmitting units each provides an interface in an apparatus, the interface including a transmitter and/or a receiver or a corresponding means for receiving and/or transmitting information, and performing necessary functions so that user data, content, control information, signalling and/or messages can be received and/or transmitted. The receiving and sending units may comprise a set of antennas, the number of which is not limited to any particular number.

The intermediate network node, or a corresponding apparatus, may generally include volatile and/or non- volatile memory 202 that may be configured to maintain information on received packets at least as long as is needed to for determining whether a packet has been received earlier. The memory may also store computer program code such as software applications (for example, for the packet handling unit) or operating systems, information, data, content, or the like for the processor to perform steps associated with operation of the apparatus in accordance with embodiments. The memory may be, for example, EEPROM, ROM, PROM, RAM, DRAM, SRAM, firmware, programmable logic, a hard drive, or other fixed data memory or storage device etc and typically store content, data, or the like. Further, the memory, or part of it, may be removable memory detachably connected to the apparatus.

It should be appreciated that the intermediate network node, or corresponding apparatus, may comprise other units used in or for information transmission. However, they are irrelevant to the actual invention and, therefore, they need not to be discussed in more detail here.

Figure 3 is a flow chart illustrating functionality of an intermediate network node according to an exemplary embodiment. The example illustrates a situation in which a communication is going on, i.e. after an establishment of the communication and before releasing the communication. Herein a communication covers information exchange by means of a telecommunications system (or systems) between at least two participants regardless of the way the information exchange takes place, such as a session, an end-to-end call, connectionless information exchange, messaging etc. The content carried in packets may be speech, video, photos, signalling, different kind of messages, etc. In other words, any kind of information may be delivered.

The intermediate network node listens, in step 301, two links to receive packets belonging to a specific communication. When a packet is received (step 302), the intermediate network node checks, in step 303, whether or not the same packet has been received earlier. The check may be based on sequence numbers or time labels added to the packet by an originator of a packet (a first sender), for example. It should be appreciated that also other methods used for identifying a packet belonging to a communication can be used. During the check it is checked whether or not a packet with the same identifying information and belonging to the same communication and having the same originator, has been received earlier. If yes, the same packet has been received earlier, the network node discards, in step 304, the packet and continues listening.

In the illustrated example, if the packet has not been received earlier, the intermediate network node checks, in step 305, whether the next apparatus to which the packet is sent, is a legacy receiver, i.e. a receiver not supporting multi-homing. If the apparatus is a legacy receiver, the network node sends, in step 306, the packet towards the destination and continues listening (step 301).

If the receiver is not a legacy receiver (step 305), the network node copies, in step 307, the packet and sends, in step 308, the packet towards its destination over a link and the copy of the packet towards the destination over another link. Then the network node continues listening (step 301).

In another implementation, the intermediate network node checks, whether the next apparatus is an end apparatus (like a user equipment) and performs the legacy receiver checking only if the next apparatus is an end apparatus. In a further implementation the intermediate node has information on the end apparatus capabilities and performs the legacy receiver check using the end apparatus capabilities, even in case the next apparatus is not an end apparatus but another intermediate network node.

As is evident from the above, by means of making the duplication visible (i.e. non-transparent) to an intermediate network node, it is always the first received packet that is forwarded. Thus delays are minimized. A further advantage is that it provides automatic reaction to possible changes in loads or link failures in the different networks/links. For example, if a network 1 is faster in delivering packet number 1 and network 2 is faster in delivering packet number 2 (load may increase or a link may fail in network 1), the intermediate node simply copies and forwards packet number 1 received over network 1, and copies and forwards packet number 2 received over network 2. Hence, the "slowening" of network 1 is not reflected to the forwarded packets; the packet number 2 received over network 2 and its copy leave the intermediate node substantially simultaneously. Further, there is no need to measure which one of the networks is faster, because the first (fastest) packet is copied and forwarded. In addition, in case a link fails, for example packet number 1 is not received over network 1, packet number 1 (received over network 2) and its copy are forwarded by the intermediate node. Thus, the level of fault tolerance may even increase.

The functions and steps described above with Figure 3 are in no absolute chronological order, and some of the steps or functions may be performed simultaneously or in an order differing from the given one. For example, in Figure 3 the intermediate network node continues the listening although it may be processing an earlier received packet. Other functions can also be executed between the steps or functions or within the steps. For example, the intermediate network node may buffer the packets in the memory and reorder the packets before copying them, i.e. before step 307. Some of the functions or the steps or part of the steps can also be left out or replaced by a corresponding function or step or part of the step. For example, in an example not covered by the invention as claimed, legacy receivers are not taken into account, and the steps 305 and 306 are left out, i.e. a packet is either discarded or reordered, if required, and then copied and both the packet and the copy sent towards the destination.

It will be obvious to a person skilled in the art that, as the technology advances, the inventive concept can be implemented in various ways. The invention and its embodiments are not limited to the examples described above but may vary within the scope of the claims.

## Claims

1. A method for a telecommunications system supporting multi-homing that means a capability to receive and/or send over two or more active communication links, the telecommunications system comprising at least a first apparatus, a second apparatus and an intermediate network node, the method comprising:
listening (301), in the intermediate network node, at least two separate incoming links, a first incoming link for receiving packets from the first apparatus, and a second incoming link for receiving from the first apparatus packets that are copies of the packets received from the first apparatus over the first incoming link so that the intermediate network node receives first either the original packet or its copy;
receiving (302), by the intermediate network node, a packet over one of the first and the second the incoming links;
checking (303), by the intermediate network node, in response to receiving the packet, whether a corresponding original packet or its copy has been received earlier;
if the corresponding original packet or its copy has been received earlier, discarding (304), by the intermediate network node, the packet;
**characterized by**
having, in the intermediate network node, information on apparatus capabilities that indicate whether an apparatus supports multi-homing or does not support multi-homing;
performing, if the corresponding original packet or its copy has not been received earlier, by the intermediate network node, the following:
checking (306), using the information on apparatus capabilities of the second apparatus, whether or not the second apparatus supports multi-homing;
if the second apparatus does not support multi-homing, sending (306) only the packet over a first outgoing link to the second apparatus, the first outgoing link being separate from the incoming links; if the second apparatus supports multi-homing, sending (308) the copy of the packet over a second outgoing link to the second apparatus, the second outgoing link being separate from the first outgoing link and the incoming links,
wherein each outgoing link from the intermediate network node and each incoming link to the intermediate network node is a direct link in a network, the first outgoing link (122) and the second outgoing link (123) are direct links between the intermediate network node (102) and the second apparatus (103), and the first incoming link (111) and the second incoming link (112) are direct links between the intermediate network node (102) and the first apparatus (101).

2. A method as claimed in claim 1, wherein a packet is the same packet when it has the same identifying information, belongs to the same communication, and has the same originator.

3. A method as claimed in any of the preceding claims, further comprising reordering the received packets that have not been discarded and sending the packets and the corresponding copies after reordering.

4. An apparatus (200) comprising means (201, 202, 211, 212, 221, 222) for implementing all steps of a method as claimed in claim 1, 2 or 3.

5. An apparatus (200) as claimed in claim 4, wherein the first incoming link and the second incoming link are of different types, and the first outgoing link and the second outgoing link are of different types.

6. An apparatus (200) as claimed in claim 4 or 5, wherein the apparatus is a gateway, a switch, a digital exchange or a media gateway controller.

7. A computer program product comprising computer program code configured to perform all steps of a method as claimed in any one of the claims 1 to 3 when executed on an apparatus.

8. A telecommunication system (100) configured to support multi-homing, the system comprising at least:
a first apparatus (101) and a second apparatus (103); and
a third apparatus (102) as an intermediate network node, the third apparatus being configured to:
- listen at least two separate incoming links (111, 112), a first incoming link for receiving packets from the first apparatus and a second incoming link for receiving from the first apparatus packets that are copies of the packets received from the first apparatus over the first incoming link so that the third apparatus receives first either the original packet or its copy;
- check, in response to a received packet, whether a corresponding original packet or its copy has been received earlier;
- discard, in response to detecting that the original packet or its copy has been received earlier, the received packet;
**characterized in that** the third apparatus is further configured to:
- have information on apparatus capabilities that indicate whether an apparatus supports multi-homing or does not support multi-homing, the multi-homing meaning a capability to receive and/or send over two or more active communication links;
- use at least two separate outgoing links (121, 122), each outgoing link being separate from the incoming links; and
- perform, in response to detecting that the original packet or its copy has not been received earlier, the following:
- - check, using the information on apparatus capabilities of the second apparatus, whether or not the second apparatus supports multi-homing;
- - send, in response to the second apparatus not supporting multi-homing, only the received packet over a first outgoing link to the second apparatus; and
- - copy in response to the second apparatus supporting multi-homing, the received packet, send the received packet over a first outgoing link (121) and the copy of the received packet over a second outgoing link (122) to the second apparatus,
wherein each outgoing link and incoming link is a direct link in a network, the first outgoing link (122) and the second outgoing link (123) are direct links between the third apparatus (102) and the second apparatus (103), and the first incoming link (111) and the second incoming link (112) are direct links between the third apparatus (102) and the first apparatus (101).

9. A system (100) as claimed in claim 8, comprising one or more further apparatuses, wherein the first apparatus is configured to be a third apparatus to a further apparatus and to have at least two separate incoming links for receiving packets and their copies from the further apparatus, the incoming links being direct links between the first apparatus and the further apparatus.

10. A system (100) as claimed in claim 8 or 9, comprising one or more further apparatuses, wherein the second apparatus is configured to be a third apparatus to a further apparatus and to have at least two separate outgoing links for sending packets and their copies to the further apparatus, the outgoing links being direct links between the second apparatus and the further apparatus.

11. A system (100) as claimed in claim 8, 9 or 10, wherein the first apparatus (101) is a sending apparatus configured to support use of at least two different networks, one of the first and second incoming links (111, 112) is a link for a connection in one network, and the other one of the first and second incoming links (111, 112) is a link for a connection in another network of different type.

12. A system (100) as claimed in claim 8, 9 or 11, wherein the second apparatus (102) is one of the endpoints of the connection.

## Patentansprüche

1. Verfahren für ein Telekommunikationssystem, das Multi-Homing unterstützt, das heißt, die Fähigkeit zwei oder mehrere aktive Kommunikationsverbindungen zu empfangen und/oder zu senden, wobei das Telekommunikationssystem mindestens eine erste Vorrichtung, eine zweite Vorrichtung und einen Netzwerkzwischenknoten umfasst, wobei das Verfahren umfasst:
Abhören (301), in dem Netzwerkzwischenknoten, von mindestens zwei getrennten eingehenden Verbindungen, einer ersten eingehenden Verbindung zum Empfangen von Paketen von der ersten Vorrichtung, und einer zweiten eingehenden Verbindung zum Empfangen von Paketen von der ersten Vorrichtung, die Kopien von Paketen sind, die von der ersten Vorrichtung über die erste eingehende Verbindung empfangen wurden, so dass der Netzwerkzwischenknoten zuerst entweder das Originalpaket oder seine Kopie empfängt;
Empfangen (302), durch den Netzwerkzwischenknoten, eines Pakets über die erste oder zweite eingehende Verbindung;
Prüfen (303), durch den Netzwerkzwischenknoten, als Antwort auf den Empfang des Pakets, ob früher ein entsprechendes Originalpaket oder seine Kopie empfangen wurden;
wenn das entsprechende Originalpaket oder seine Kopie früher empfangen wurden, Löschen (304), durch den Netzwerkzwischenknoten, des Pakets;
**gekennzeichnet durch**
den Besitz, in dem Netzwerkzwischenknoten, von Information über Vorrichtungsfähigkeiten, die angeben, ob die Vorrichtung Multi-Homing unterstützt oder Multi-Homing nicht unterstützt;
Durchführung, wenn das entsprechende Originalpaket oder seine Kopie nicht früher empfangen wurden, durch den Netzwerkzwischenknoten, des nachstehenden:
Prüfen (306), unter Anwendung der Information über die Vorrichtungsfähigkeiten der zweiten Vorrichtung, ob die zweite Vorrichtung Multi-Homing unterstützt oder nicht;
wenn die zweite Vorrichtung Multi-Homing nicht unterstützt, Senden (306) von lediglich dem Paket über eine erste ausgehende Verbindung zu der zweiten Vorrichtung, wobei die erste ausgehende Verbindung von den eingehenden Verbindungen getrennt ist;
wenn die zweite Vorrichtung Multi-Homing unterstützt, Senden (308) der Kopie des Pakets über eine zweite ausgehende Verbindung zu der zweiten Vorrichtung, wobei die zweite ausgehende Verbindung getrennt von der ersten ausgehenden Verbindung und den eingehenden Verbindungen ist,
wobei jede ausgehende Verbindung von dem Netzwerkzwischenknoten und jede eingehende Verbindung zu dem Netzwerkzwischenknoten eine direkte Verbindung in einem Netzwerk ist, die erste ausgehende Verbindung (122) und die zweite ausgehende Verbindung (123) direkte Verbindungen zwischen dem Netzwerkzwischenknoten (102) und der zweiten Vorrichtung (103) sind, und die erste eingehende Verbindung (111) und die zweite eingehende Verbindung (112) direkte Verbindungen zwischen dem Netzwerkzwischenknoten (102) und der ersten Vorrichtung (101) sind.

2. Verfahren nach Anspruch 1, wobei ein Paket das gleiche Paket ist, wenn es die gleiche Identitätsinformation aufweist, zu der gleichen Kommunikation gehört und denselben Urheber aufweist.

3. Verfahren nach einem der vorstehenden Ansprüche, das des Weiteren die Nachbestellung der empfangenen Pakete, die nicht gelöscht wurden, und das Senden der Pakete und der entsprechenden Kopien nach der Nachbestellung umfasst.

4. Vorrichtung (200), die Mittel (201, 202, 211, 212, 221, 222) zur Implementierung aller Schritte eines Verfahrens nach einem der Ansprüche 1, 2 oder 3 umfasst.

5. Vorrichtung (200) nach Anspruch 4, wobei die erste eingehende Verbindung und die zweite eingehende Verbindung unterschiedliche Typen sind, und die erste ausgehende Verbindung und die zweite ausgehende Verbindung unterschiedliche Typen sind.

6. Vorrichtung (200) nach Anspruch 4 oder 5, wobei die Vorrichtung ein Gateway, ein Switch, eine digitale Vermittlungsstelle (digital exchange) oder eine Medien-Gateway-Steuereinrichtung ist.

7. Computerprogrammprodukt, das Computerprogrammcode umfasst, konfiguriert, um alle Schritte eines Verfahrens nach einem der Ansprüche 1 bis 3 durchzuführen, wenn es auf einer Vorrichtung ausgeführt wird.

8. Telekommunikationssystem (100), konfiguriert, um Multi-Homing zu unterstützen, wobei das System mindestens umfasst:
eine erste Vorrichtung (101) und eine zweite Vorrichtung (103), und
eine dritte Vorrichtung (102) als einen Netzwerkzwischenknoten, wobei die dritte Vorrichtung konfiguriert ist, zum:
- Abhören von mindestens zwei getrennten eingehenden Verbindungen (111, 112), einer ersten eingehenden Verbindung zum Empfangen von Paketen von der ersten Vorrichtung, und einer zweiten eingehenden Verbindung zum Empfangen von Paketen der ersten Vorrichtung, die Kopien von Paketen sind, die von der ersten Vorrichtung über die erste eingehende Verbindung empfangen wurden, so dass die dritte Vorrichtung entweder zuerst das Originalpaket oder seine Kopie empfängt;
- Prüfen, als Antwort auf ein empfangenes Paket, ob früher ein entsprechendes Originalpaket oder seine Kopie empfangen wurden;
- Löschen, als Antwort auf die Feststellung, dass das Originalpaket oder seine Kopie früher empfangen wurden, des empfangenen Pakets;
**dadurch gekennzeichnet, dass**
die dritte Vorrichtung desweiteren konfiguriert ist, um:
- Information über Vorrichtungsfähigkeiten aufzuweisen, die angeben, ob eine Vorrichtung Multi-Homing unterstützt oder Multihoming nicht unterstützt, wobei mit Multi-Homing eine Fähigkeit gemeint ist, zwei oder mehrere aktive Kommunikationsverbindungen zu empfangen und/oder zu senden;
- mindestens zwei getrennte ausgehende Verbindungen (121, 122) zu verwenden, wobei jede ausgehende Verbindung von den eingehenden Verbindungen getrennt ist; und
- als Antwort auf die Feststellung, dass das Originalpaket oder seine Kopie nicht früher empfangen wurden, Durchführen des nachstehenden:
-- Prüfen, unter Anwendung der Information über die Vorrichtungsfähigkeiten der zweiten Vorrichtung, ob die zweite Vorrichtung Multi-Homing unterstützt oder nicht;
-- Senden, als Antwort darauf, dass die zweite Vorrichtung Multi-Homing nicht unterstützt, von lediglich dem empfangenen Paket über eine erste ausgehende Verbindung zu der zweiten Vorrichtung, und
-- Kopieren, als Antwort darauf, dass die zweite Vorrichtung Multi-Homing unterstützt, des empfangenen Pakets, Senden des empfangenen Pakets über eine erste ausgehende Verbindung (121) und der Kopie des empfangenen Pakets über eine zweite ausgehende Verbindung (122) zu der zweiten Vorrichtung,
wobei jede ausgehende Verbindung und jede eingehende Verbindung eine direkte Verbindung in einem Netzwerk ist, die erste ausgehende Verbindung (122) und die zweite ausgehende Verbindung (123) direkte Verbindungen zwischen der dritten Vorrichtung (102) und der zweiten Vorrichtung (103) sind, und die erste eingehende Verbindung (111) und die zweite eingehende Verbindung (112) direkte Verbindungen zwischen der dritten Vorrichtung (102) und der ersten Vorrichtung (101) sind.

9. System (100) nach Anspruch 8, umfassend eine oder mehrere weitere Vorrichtungen, wobei die erste Vorrichtung konfiguriert ist, eine dritte Vorrichtung zu einer weiteren Vorrichtung zu sein und mindestens zwei getrennte eingehende Verbindungen zum Empfangen von Paketen und ihren Kopien von der weiteren Vorrichtung aufzuweisen, wobei die eingehenden Verbindungen direkte Verbindungen zwischen der ersten Vorrichtung und der weiteren Vorrichtung sind.

10. System (100) nach Anspruch 8 oder 9, umfassend eine oder mehrere weitere Vorrichtungen, wobei die zweite Vorrichtung konfiguriert ist, eine dritte Vorrichtung zu einer weiteren Vorrichtung zu sein und mindestens zwei getrennte ausgehende Verbindungen zum Senden von Paketen und ihren Kopien zu der weiteren Vorrichtung aufzuweisen, wobei die ausgehenden Verbindungen direkte Verbindungen zwischen der zweiten Vorrichtung und der weiteren Vorrichtung sind.

11. System (100) nach Anspruch 8, 9 oder 10, wobei die erste Vorrichtung (101) eine Sendevorrichtung ist, konfiguriert, um die Anwendung von mindestens zwei unterschiedlichen Netzwerken zu unterstützen, wobei eine der ersten oder zweiten eingehenden Verbindungen (111, 112) eine Verbindung für einen Anschluss in ein Netzwerk, und die andere der ersten und zweiten eingehenden Verbindungen (111, 112) eine Verbindung für einen Anschluss in ein anderes Netzwerk eines unterschiedlichen Typs ist.

12. System (100) nach Anspruch 8, 9 oder 11, wobei die zweite Vorrichtung (102) eine der Endpunkte des Anschlusses ist.

## Revendications

1. Procédé pour un système de télécommunication prenant en charge un rattachement multiple, également appelé multiconnexion, à savoir une capacité à recevoir et/ou à émettre sur deux liaisons de communication actives ou plus, le système de télécommunication comprenant au moins un premier appareil, un deuxième appareil et un noeud de réseau intermédiaire, le procédé comprenant les étapes ci-dessous consistant à :
écouter (301), dans le noeud de réseau intermédiaire, au moins deux liaisons entrantes distinctes, une première liaison entrante destinée à recevoir des paquets en provenance du premier appareil, et une seconde liaison entrante destinée à recevoir, en provenance du premier appareil, des paquets qui correspondent à des copies des paquets reçus en provenance du premier appareil sur la première liaison entrante, de sorte que le noeud de réseau intermédiaire reçoit tout d'abord le paquet d'origine ou sa copie ;
recevoir (302), par le biais du noeud de réseau intermédiaire, un paquet sur l'une des première et seconde liaisons entrantes ;
vérifier (303), par le biais du noeud de réseau intermédiaire, en réponse à la réception du paquet, si un paquet d'origine correspondant ou sa copie a été reçu(e) antérieurement ;
si le paquet d'origine correspondant ou sa copie a été reçu(e) antérieurement, mettre au rebut (304) le paquet, par le biais du noeud de réseau intermédiaire ;
**caractérisé par**
la présence, dans le noeud de réseau intermédiaire, d'information sur des capacités d'appareil qui indiquent si un appareil prend en charge un rattachement multiple ou ne prend pas en charge un rattachement multiple ;
la mise en oeuvre, si le paquet d'origine correspondant ou sa copie n'a pas été reçu(e) antérieurement, par le noeud de réseau intermédiaire, des étapes ci-dessous consistant à :
vérifier (306), en utilisant les informations sur des capacités d'appareil du deuxième appareil, si le deuxième appareil prend ou ne prend pas en charge un rattachement multiple ;
si le deuxième appareil ne prend pas en charge un rattachement multiple, envoyer (306) uniquement le paquet sur une première liaison sortante au deuxième appareil, la première liaison sortante étant distincte des liaisons entrantes ;
si le deuxième appareil prend en charge un rattachement multiple, envoyer (308) la copie du paquet sur une seconde liaison sortante au deuxième appareil, la seconde liaison sortante étant distincte de la première liaison sortante et des liaisons entrantes ;
dans lequel chaque liaison sortante à partir du noeud de réseau intermédiaire et chaque liaison entrante au niveau du noeud de réseau intermédiaire correspondent à une liaison directe dans un réseau, la première liaison sortante (122) et la seconde liaison sortante (123) correspondent à des liaisons directes entre le noeud de réseau intermédiaire (102) et le deuxième appareil (103), et la première liaison entrante (111) et la seconde liaison entrante (112) correspondent à des liaisons directes entre le noeud de réseau intermédiaire (102) et le premier appareil (101).

2. Procédé selon la revendication 1, dans lequel un paquet est le même paquet lorsqu'il présente les mêmes informations d'identification, lorsqu'il appartient à la même communication et lorsqu'il présente le même expéditeur.

3. Procédé selon l'une quelconque des revendications précédentes, comprenant en outre l'étape consistant à réorganiser les paquets reçus qui n'ont pas été mis au rebut et à envoyer les paquets et les copies correspondantes après l'étape de réorganisation.

4. Appareil (200) comportant des moyens (201, 202, 211, 212, 221, 222) pour mettre en oeuvre toutes les étapes d'un procédé selon la revendication 1, 2 ou 3.

5. Appareil (200) selon la revendication 4, dans lequel la première liaison entrante et la seconde liaison entrante sont de types différents, et la première liaison sortante et la seconde liaison sortante sont de types différents.

6. Appareil (200) selon la revendication 4 ou 5, dans lequel l'appareil est une passerelle, un commutateur, un commutateur numérique ou un contrôleur de passerelle multimédia.

7. Produit-programme informatique comprenant un code de programme informatique configuré de manière à mettre en oeuvre toutes les étapes d'un procédé selon l'une quelconque des revendications 1 à 3 lorsqu'il est exécuté sur un appareil.

8. Système de télécommunication (100) configuré de manière à prendre en charge un rattachement multiple, également appelé multiconnexion, le système comportant au moins :
un premier appareil (101) et un deuxième appareil (103) ; et
un troisième appareil (102), sous la forme d'un noeud de réseau intermédiaire, le troisième appareil étant configuré de manière à :
- écouter au moins deux liaisons entrantes distinctes (111, 112), une première liaison entrante étant destinée à recevoir des paquets en provenance du premier appareil, et une seconde liaison entrante étant destinée à recevoir, en provenance du premier appareil, des paquets qui correspondent à des copies des paquets reçus en provenance du premier appareil sur la première liaison entrante, de sorte que le troisième appareil reçoit tout d'abord le paquet d'origine ou sa copie ;
- vérifier en réponse à un paquet reçu, si un paquet d'origine correspondant ou sa copie a été reçu(e) antérieurement ;
- mettre au rebut le paquet reçu, dès lors qu'il a été détecté que le paquet d'origine correspondant ou sa copie a été reçu(e) antérieurement ;
**caractérisé en ce que** le troisième appareil est en outre configuré de manière à :
- présenter des informations sur des capacités d'appareil qui indiquent si un appareil prend en charge un rattachement multiple ou ne prend pas en charge un rattachement multiple, le rattachement multiple signifiant une capacité à recevoir et/ou à émettre sur deux liaisons de communication ou plus ;
- utiliser au moins deux liaisons sortantes distinctes (121, 122), chaque liaison sortante étant distincte des liaisons entrantes ; et
- mettre en oeuvre, dès lors qu'il a été détecté que le paquet d'origine ou sa copie n'a pas été reçu(e) antérieurement, les étapes ci-dessous consistant à :
- - vérifier, en utilisant les informations sur des capacités d'appareil du deuxième appareil, si le deuxième appareil prend ou ne prend pas en charge un rattachement multiple ;
- - envoyer, en réponse au fait que le deuxième appareil ne prend pas en charge un rattachement multiple, uniquement le paquet reçu sur une première liaison sortante au deuxième appareil ;
- - copier le paquet reçu, en réponse au fait que le deuxième appareil prend en charge un rattachement multiple, envoyer le paquet reçu sur une première liaison sortante (121) et la copie du paquet reçu sur une seconde liaison sortante (122), au deuxième appareil ;
dans lequel chaque liaison sortante et chaque liaison entrante correspondent à une liaison directe dans un réseau, la première liaison sortante (122) et la seconde liaison sortante (123) correspondent à des liaisons directes entre le troisième appareil (102) et le deuxième appareil (103), et la première liaison entrante (111) et la seconde liaison entrante (112) correspondent à des liaisons directes entre le troisième appareil (102) et le premier appareil (101).

9. Système (100) selon la revendication 8, comprenant un ou plusieurs appareils supplémentaires, dans lequel le premier appareil est configuré de manière à être un troisième appareil pour un appareil supplémentaire et à présenter au moins deux liaisons entrantes distinctes pour recevoir les paquets et leurs copies en provenance de l'appareil supplémentaire, les liaisons entrantes étant des liaisons directes entre le premier appareil et l'appareil supplémentaire.

10. Système (100) selon la revendication 8 ou 9, comprenant un ou plusieurs appareils supplémentaires, dans lequel le deuxième appareil est configuré de manière à être un troisième appareil pour un appareil supplémentaire et à présenter au moins deux liaisons sortantes distinctes pour envoyer des paquets et leurs copies à l'appareil supplémentaire, les liaisons sortantes étant des liaisons directes entre le deuxième appareil et l'appareil supplémentaire.

11. Système (100) selon la revendication 8, 9 ou 10, dans lequel le premier appareil (101) est un appareil émetteur configuré de manière à prendre en charge l'utilisation d'au moins deux réseaux différents, dans lequel l'une des première et seconde liaisons entrantes (111, 112) est une liaison pour une connexion dans un réseau, et l'autre des première et seconde liaisons entrantes (111, 112) est une liaison pour une connexion dans un autre réseau de type différent.

12. Système (100) selon la revendication 8, 9 ou 11, dans lequel le deuxième appareil (102) est l'un des points d'extrémité de la connexion.
